# EUROPEAN PATENT APPLICATION

(11) **EP 4 471 653 A1**
(43) Date of publication of application: **04.12.2024**
(21) Application number: 24179129.2
(22) Date of filing: 30.05.2024
(51) Int. Cl.: G06F 30/27, G06F 30/392, G06F 30/3947, G06F 30/3953, G06F 30/398, G06F 115/02

(54) **DESIGN TOOL FOR INCREMENTAL PLACEMENT OF ELEMENTS ON FLOORPLAN OF AN NOC**

(30) Priority: 30.05.2023 US 202363504793 P; 29.05.2024 US 202418677827
(71) Applicant: Arteris, Inc, Campbell, CA 95008 (US)
(72) Inventor: CHARIF, Amir, Paris (FR)
(74) Representative: Barker Brettell LLP

(57) **Abstract**

A method and design tool for the physical design of a network-on-chip (NoC) through iterations of element placement, comprising:

receiving a floorplan with at least one connected zone and blockage areas; locating at least one pinned element in the connected zone;
identifying a plurality of unpinned elements that are in communication with the pinned element, wherein the plurality of unpinned element are to be located within the connected zone;
pinpointing a legal placement position for each of the plurality of unpinned elements within the connected zone;
determining a first routing path for the communication path between the pinned element and the plurality of unpinned elements;
adjusting placement of one or more the unpinned element within the floorplan to improve the first routing path and balance segment lengths until an optimal routing is determined.

## Description

### TECHNICAL FIELD

The present technology is in the field of electronic system design and, more specifically, related to physical implementation guidance for a fast, incremental process for computing a legal and optimized placement of an entire network-on-chip (NoC) topology on a floorplan.

### BACKGROUND

Multiprocessor systems have been implemented in systems-on-chips (SoCs) that communicate through NoCs. The SoCs include instances of initiator intellectual properties (IPs) and target IPs. Transactions, in the form of packets, are sent from an initiator to one or more targets using industry-standard protocols. The initiator, connected to the NoC, sends a request transaction to a target, using an address to select the target. The NoC decodes the address and transports the request from the initiator to the target. The target handles the transaction and sends a response transaction, which is transported back by the NoC to the initiator.

For a given set of performance requirements, such as connectivity and latency between source and destination, frequency of the various elements, maximum area available for the NoC logic and its associated routing (wiring), minimum throughput between sources and destinations, power consumption requirements for the NoC, and position on the floorplan of elements attached to the NoC, it is a complex task to create an optimal NoC that fulfills all the requirements with a minimum amount of logic and wires. This is typically the job of the chip architect or chip designer to create this optimal NoC, and this is a difficult and time-consuming task. In addition to this being a difficult task, the design of the NoC is revised every time one of the requirements changes, such as modifications of the chip floorplan, addition or deletion of IP components, or modification of the expected performance. As a result, this task needs to be redone frequently over the design time of the chip using any tool.

Consider a software tool that is used to edit a network-on-chip topology on top of a floorplan in a graphical view. The user may load an existing network-on-chip topology that was created without physical information (i.e. without a floorplan), in which case the network elements do not have initial positions on the floorplan. The user may also modify the topology (or parts of it) on the floorplan, but the element placements are not necessarily legal with respect to multiple placement constraints (e.g. clock domain locations, power domain locations, module location), and the global placement may not be optimal in terms of wire length. Therefore, what is needed is a tool that provides a process to interactively compute a legal and optimized placement of an existing topology on a floorplan that is fast because it is invoked multiple times during topology editing. Further, what is needed is a tool that utilizes machine learning models that are trained to perform the interactive computation.

### SUMMARY

In accordance with various embodiments and aspects of the invention, a tool is disclosed that allows interactive compute a legal and optimization placement of an existing topology on a floorplan. The tool can be invoked multiple times during topology editing because it is fast. The tool also includes a machine learning model that performs the interactive computations. Further, the tool has the ability to use feedback to train a machine learning model for automated and assisted topology analysis and synthesis.

### BRIEF DESCRIPTION OF THE DRAWINGS

FIG. 1 shows a floorplan with blockage areas and connected zones in accordance with various aspects and embodiments of the invention;
FIG. 2 shows a floorplan with blockage areas within different power domain constraints and clock domain constraints in accordance with various aspects and embodiments of the invention;
FIG. 3 shows a floorplan with network elements requiring global placement in accordance with various aspects and embodiments of the invention;
FIG. 4 shows a floorplan with legal placement of elements in the floorplan in accordance with the various aspects and embodiments of the invention;
FIG. 5 shows a floorplan with legal placement that is locally determined in accordance with the various aspects and embodiments of the invention; and
FIG. 6 shows a process for placement of elements in the floorplan in accordance with the various aspects and embodiments of the invention.

### DETAILED DESCRIPTION

The following describes various examples of the present technology that illustrate various aspects and embodiments of the invention. Generally, examples can use the described aspects in any combination. All statements herein reciting principles, aspects, and embodiments as well as specific examples thereof, are intended to encompass both structural and functional equivalents thereof. Additionally, it is intended that such equivalents include both currently known equivalents and equivalents developed in the future, i.e., any elements developed that perform the same function, regardless of structure.

It is noted that, as used herein, the singular forms "a," "an" and "the" include plural referents unless the context clearly dictates otherwise. Reference throughout this specification to "one aspect," "an aspect," "certain aspects," "various aspects," or similar language means that a particular aspect, feature, structure, or characteristic described in connection with any embodiment is included in at least one embodiment of the invention.

Appearances of the phrases "in one embodiment," "in at least one embodiment," "in an embodiment," "in certain embodiments," and similar language throughout this specification may, but do not necessarily, all refer to the same embodiment or similar embodiments. Furthermore, aspects and embodiments of the invention described herein are merely exemplary, and should not be construed as limiting the scope or spirit of the invention as appreciated by those of ordinary skill in the art. The disclosed invention is effectively made or used in any embodiment that includes any novel aspect described herein. All statements herein reciting principles, aspects, and embodiments of the invention are intended to encompass both structural and functional equivalents thereof. It is intended that such equivalents include both currently known equivalents and equivalents developed in the future.

As used herein, a transaction may be a request transaction or a response transaction. Examples of request transactions include write request and read request.

As used herein, a node is defined as a distribution point or a communication endpoint that is capable of creating, receiving, and/or transmitting information over a communication path or channel. A node may refer to any one of the following: switches, splitters, mergers, buffers, and adapters. As used herein, splitters and mergers are switches; not all switches are splitters or mergers. As used herein and in accordance with the various aspects and embodiments of the invention, the term "splitter" describes a switch that has a single ingress port and multiple egress ports. As used herein and in accordance with the various aspects and embodiments of the invention, the term "merger" describes a switch that has a single egress port and multiple ingress ports.

In accordance with the various aspects of the invention, a system-on-chip (SoC) includes multiple clock domains and multiple power domains. A clock domain is defined by all the logic fed by a given clock input. The clock input is characterized by the frequency of the clock, which is its most important parameter. A power domain is defined by all the logic getting power supply from the same power source. In accordance with the various aspects of the invention, the power source is gated, thus, the power domain can be on or off or isolated from other power domains. As such, the designer provides the set of clock domain and power domain constraints as part of the initial design.

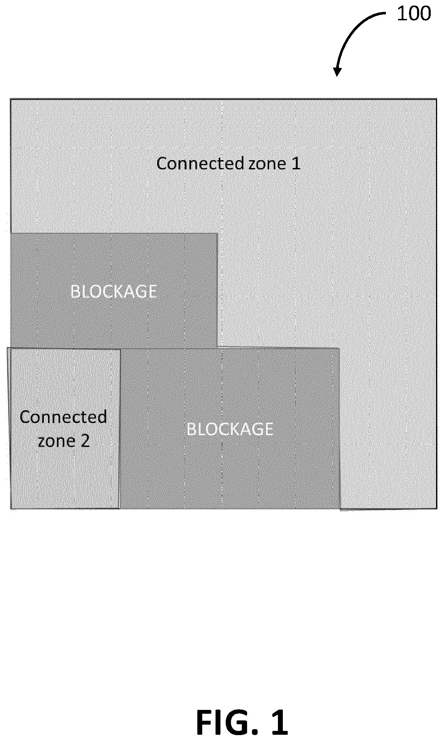

Referring now to FIG. 1, a floorplan 100 is shown with blockage areas and placement areas, such as connected zone 1 and connected zone 2. In accordance with various aspects of the invention, there are pinned and unpinned elements. The user has the ability to pin/unpin a network element using the tool. A pinned element is one that will not be moved by the automatic placer or the machine learning model of the tool; its position acts as a reference point to place other elements. Unpinned elements can be move by the tool and are free to move in the identified areas. In accordance with various aspects of the invention, the tool includes a placer module. The placer module may change their position for optimization/legalization purposes. In accordance with various aspects of the invention, network reference points (the fixed-position ports, or sockets) can be automatically pinned by the tool initially. A connected zone is a collection of available (i.e. not blocked) floorplan positions, such that every position in the collection can reach any other position in the same collection without crossing a blockage or blockage area. In accordance with various aspects of the invention, if two network elements are placed within the same connected zone, they are guaranteed to reach each other, that is, the wire connecting them does not have to cross a blockage.

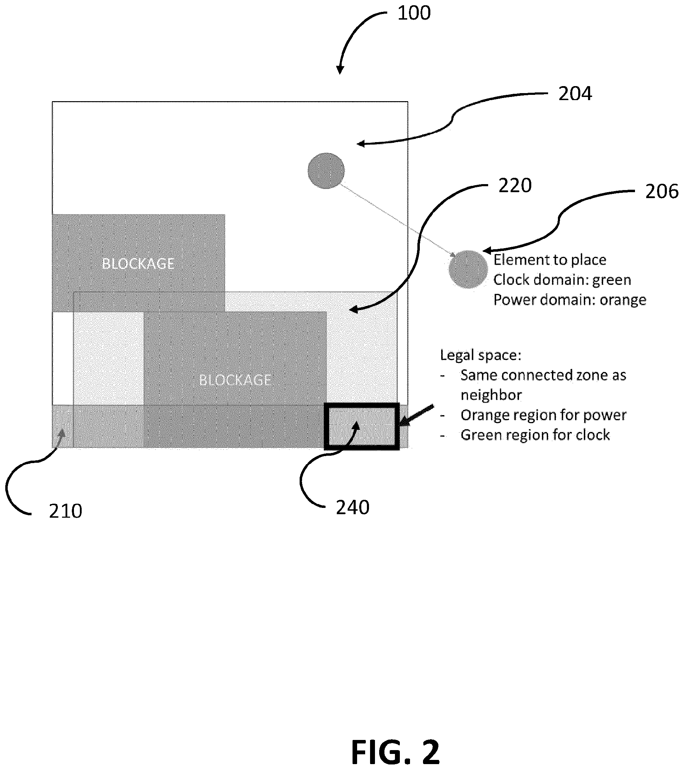

Referring now to FIG. 2, the floorplan 100 is shown with different clock domains and power domains, such as clock domain 220 and power domain 210. In accordance with various aspects of the invention, the tool handles placement constraints for legal placement to satisfy the constraints based on clock requirements and power requirements. As shown and in accordance with some aspects and embodiments of the invention, an element 204 is in the connected region1 , which includes power domain 210 and clock domain 220. The tool includes a machine learning model that executes a process to determine, for any single network element, the legal positions where it can be placed. For a given position in the floorplan to be legal, several criteria can be checked. In accordance with various aspects of the invention, one criteria is the position is in the useable space, not a blockage area. In accordance with various aspects of the invention, one criteria is if the network element is part of a module that has an explicit placement restriction (aka a Move bound), then the position must be within the bounds of the restriction. In accordance with various aspects of the invention, one criteria is that if the network element is part of a clock domain that has an explicit placement restriction, then the position must be within the bounds of the restriction. In accordance with various aspects of the invention, the criteria applies in the same manner for the power domain requirements. For example, if the element 204 is in communication with an element 206 and the element 206 needs to be placed in the connected region 1, then the element must be place in location that meets both the power constraints and the clock constraints. In the present non-limiting example, location 240 meets all the constraints and is a legal location for placement of the element 206.

In accordance with various aspects of the invention, one criteria is related to pinned network elements. If the network element is pinned, then the only legal position for the unit is its current position; the tool may report an error if the current position is not a legal one given this criteria. The error is used as feedback to the machine learning model to further train the machine learning model to detect all future errors.

In accordance with various aspects of the invention, one criteria is that the network element must be able to reach its neighbors, which are network elements that are directly connected to it; this, the network element must be in the same connected zone as its neighbors.

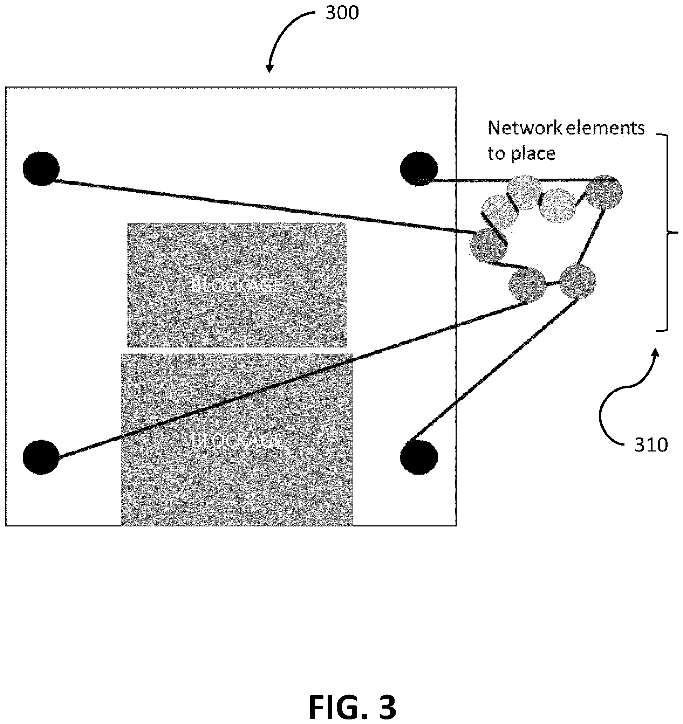

Referring now to FIG. 3-5, the floorplan 100 is changed by the tool's placer module or placement module implementing a two phase placement or pinpointing locations in a floorplan 300. All the changes and placements are presented in real-time through a user's interaction with the tool using at least a graphical view on a display or graphical user interface. In accordance with various aspects of the invention, the tool uses a placement process that operates in two phases. In accordance with various aspects of the invention, the tool uses a global coarse-grained placement. The tool places the network-on-chip (NoC) or network globally; that is, all unpinned units or elements 310 can move simultaneously, far away from their current position, in a way that minimizes the global wire length and average route length. To compensate for the complexity of the global placement, this step does not account for precise wire routes. In accordance with various aspects of the invention, the distance between two subsequent network elements is considered to be the Manhattan distance (dX + dY). In accordance with various aspects of the invention, the tool includes a solver module that solve this problem, which only constrains network elements to be in their legal positions, and minimizes the total segment length that is a sum of Manhattan distances. In accordance with various aspects of the invention, the tool utilizes a machine learning model to generate and determine segments and the total segment length.

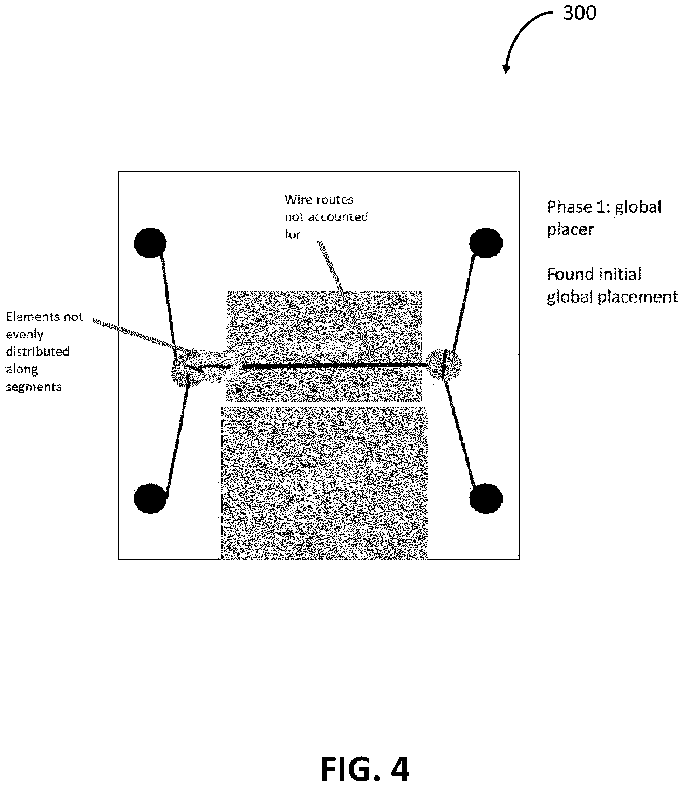

After this step, the tool generates a good initial global placement as shown in FIG. 4 in accordance with the various aspects and embodiments of the invention. This results in some segments being non-optimal. The total segment (or wire) length may not be accurate because precise routes were not identified and hence, total wire length is not taken into account. Also, since only the total length is optimized, the machine learning model does not attempt to balance segment lengths.

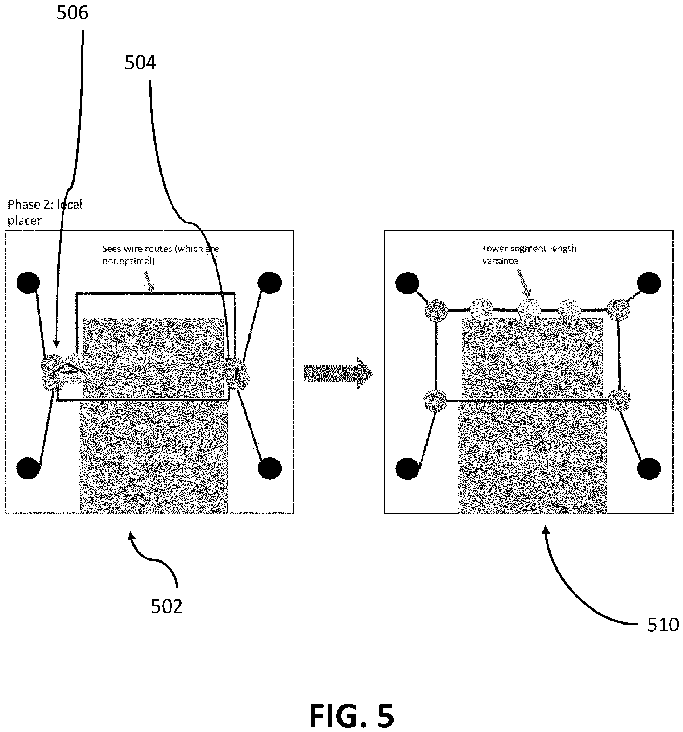

In accordance with various aspects of the invention, the tool edits the initial layout or placement. The tool uses local fine-grained placement to refine and determine a precise result. The tool now operates locally instead of globally to readjust placement (or reposition) of elements along the route, which may have been non-optimal placement or non-optimal path/route. Referring again to FIG. 5, the tool operates locally, one network element at a time to place elements 504 and elements 506 in the floorplan 502.. The tool computes precise wire lengths and segment balance is considered. In accordance with various aspects of the invention, the tool utilizes a machine learning model to determine precise wire length and segment balance. On each iteration, a network element is moved by one position (east, west, north, or south), if and only if it either improves the wire length surrounding it, which includes the total length of wires connecting it to its neighbors, taking the precise rectilinear routes into account, or if it reduces the variance of segment lengths surrounding it, which is attempting to place elements at an equal distance from all of the neighbors. Other secondary criteria can be added here, such as cell density for example. The machine learning model of the tool continues the process until the placement stabilizes or if a maximum number of iterations is reached. After the tool uses these two steps, which are complementary, a global placement possibility for the network is reached in a short time. After some iterations, the resulting placement of the element is shown in the floorplan 510.

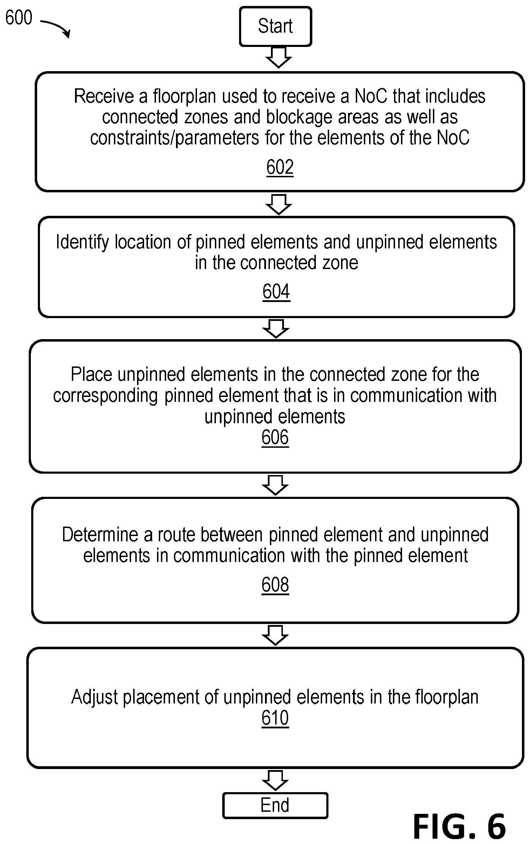

Referring now to FIG. 6, the design tool executes a process 600 in accordance with the various aspects and embodiments of the present invention. At step 602 the floorplan that will be used to build the NoC is provided, wherein the floorplan includes connected zones and blockage areas. Also, the tool receives parameters, requirements, and/or constraints for elements of the NoC. At step 604, the location of pinned elements are identified within each connected zone. The tool also receives information about unpinned elements for each connected zone and the corresponding pinned element that will be connected to the unpinned element. At step 606, the tool positions or pinpoints the location of unpinned elements within their respective connected zone for the corresponding pinned element in communication therewith. As elements are placed withing the floorplan, the tool determines legal spaces for placement of each element. These legal space are the required locations for placement of unpinned elements because these legal space meet the requirements or constraints associated with each the placement of an unpinned element.

At step 608, the tool (or the machine learning model of the tool) determines routes that connect the pinned element and its corresponding unpinned elements. The tool also identifies routes between other pinned elements and other unpinned elements within the same connected zone. At step 610, the tool (or the machine learning model) adjusts the location of unpinned elements in the floorplan to optimized and balances segments of the various routes. In accordance with the various aspects and embodiments of the invention, the machine learning model of the tool can also suggest adjustments to blockage areas to create a more optimal floorplan usage.

In accordance with the various aspects of the invention, initiators and targets are communicatively connected to the NoC. An initiator is a unit that sends requests. An initiator typically is configured to read and write commands. A target is a unit that serves or responds to the requests. A target typically is configured to read and write commands. Each initiator is attached to or connected to the NoC through a NIU. The NIU that is attached to an initiator is called an Initiator Network Interface Unit (INIU). Further, each target is attached to the NoC through an NIU. The NIU that is attached to a target is called a Target Network Interface Unit (TNIU). The primary functionality of the NoC is to carry each request from an initiator to the desired destination target, and if the request demands or needs a response, then the NoC carries each target's response to the corresponding requesting initiator. Initiators and targets have many different parameters that characterize them. In accordance with the various aspects of the invention, for each initiator and target, the clock domain and power domain they belong to are defined. The width of the data bus they use to send, write, and receive read payloads is a number of bits. In accordance with the various aspects of the invention, the width of the data bus for the connection (the communication path to/from a target) used to send, write requests, and receive write responses are also defined. Furthermore, the clock and power domain definition are a reference to the previously described clock and power domains existing in the SoC, as described herein.

In accordance with the various aspects of the invention, initiators are not required to be able to send requests to all targets or targets that are connected to the NoC. The precise definition of the target that can receive requests from an initiator is outlined in a connectivity table, not shown. The connectivity and traffic class labeling information can be represented as an explicit or conceptual matrix. Each initiator has a row and each target has a column. If an initiator must be able to send traffic to a target, a traffic class label must be present at the intersection between the initiator row and the target column. If no label is present at an intersection, then the tool does not need connectivity between that initiator and that target. In accordance with the various aspects of the invention, the actual format used to represent connectivity can be different, as long as each pair of initiator-target combination has a precise definition of its traffic class, or no classification label if there is no connection. It is within the scope of this invention for an initiator/target connection to support a plurality of traffic classes.

It is within the scope of this invention for latency to refer to the number of clock cycles it takes for data to make its way through the network. Latency causes problems in transport networks despite having a high-bandwidth (frequency). An example of a "real-time traffic class" would be video data from a camera in a self-driving car. It isn't acceptable to have long latency in the propagation of the data. If some data were lost it would make the vehicle unsafe. A still real-time but less vital traffic class would be for audio and/or video in the entertainment system. It would not be desirable to have a gap in that data, but not unsafe. An example of non-real-time data would be data from a gas gauge sensor in a car. If the data is delayed for several seconds, it is of no matter since the rate of change of the data is quite slow compared to the operating speed of an SoC.

In accordance with some aspects of the invention, scenarios are not defined for the tool, in which case the tool optimizes the NoC synthesis process for physical cost, such as lowest gate cost and/or lowest wire cost.

In accordance with various aspects of the invention, the tool handles the connectivity matrix with the following defined parameter or components:
- one network interface unit per initiator,
- one network interface unit per target,
- one switch is created per defined traffic class, called the main switch of the class,
- one switch after each initiator/initiator NIU that split traffic to the different main switches that this initiator needs to reach,
- one switch before each target/target NIU that merges traffic from the different main switches that are sending traffic to that target

The data width of each switch, and the clock domain it belongs to, is computed using the data width of each attached interface, and their clock domain, as inputs to the tool. In accordance with the various aspects of the invention, each step that transforms the network, which is part of the NoC, also performs the computation of the data width and the clock domain of the newly created network elements.

In accordance with various aspects of the invention, using the tool, each switch for each of the mergers in the main switch is decomposed further into a cascade of mergers, each merger of the cascade being placed on a branching point of the merger roadmap of the attached target. The branching point of the roadmap is defined by the fact that the path is being split into two or more branches. The process of decomposing a splitter in a cascade of splitters preserves the original splitter functionality, as the number of inputs to the cascade is still one, and the number of outputs of the cascade is identical to the number of outputs of the original splitter. The process of decomposing a merger in a cascade of mergers preserves the original merger functionality, as the number of outputs of the cascade is still one, and the number of inputs to the cascade is identical to the number of inputs to the original merger. In accordance with the various aspects of the invention, the effect of the process is to obtain a set of elementary switches, which are represented by the mergers and the splitters, that are physically placed close to where the actual connections between switches need to be.

In accordance with the various aspects of the invention, the tool transforms the network in order to reduce the number of wires used between switches achievable, while keeping the performance as defined in the scenarios, which are a set of required minimum throughput between initiator and target. In accordance with the various aspects of the invention, switches are clustered for performance aware switching, mergers and splitters that have been distributed on the roadmaps are treated like ordinary switches.

In accordance with other aspects of the invention, extension of clock and power domains on the floorplan are provided and each element is tested to ensure it is located within the bounds of the specified clock and power domain. If the test fails, the element is moved until a suitable location is found where the test is passing. Once a suitable placement has been found for each element, a routing is done of each connection between elements. The routing process will find a suitable path for the set of wires making the connections between elements. After routing is done, distance-spanning pipeline elements are inserted on the links if required, using the information provided regarding the capabilities of the technology, based on how long it takes for a signal to cover a 1 mm distance.

In accordance with some aspects and embodiments of the invention, the tool generates one or more computer files describing the generated NoC that includes:
The list of network elements with their configuration: data width, clock domain.

The position of each generated network element on the floor plan.

The set of routes through the network elements implementing the connectivity. In accordance with the aspects of the invention, a route is an ordered list of network elements, one for each pair of (initiator, target) and one for each pair of (target, initiator). The route represents how traffic between the pairs will flow and through which elements.

In accordance with various aspects of the invention, the tool is used to generate metrics about the generated NoC, such as: histograms of wire length distribution, number of switches, histogram of switch by size.

In accordance with another aspect of the invention, the tool automatically inserts in the network various adapters and buffers. The tool inserts the adapters based on the adaptation required between two elements that have different data width, different clock and power domains. The tool inserts the buffers based on the scenarios and the detected rate mismatch.

In accordance with some aspects and embodiments, the tool can be used to ensure multiple iterations of the synthesis are done for incremental optimization of the NoC, which includes a situation when one constraint provided to the tool is information about the previous run.

After execution of the synthesis process by the software, the results are produced in a machine-readable form, such as computer files using a well-defined format to capture information. An example of such a format is XML, another example of such a format is JSON. The scope of the invention is not limited by the specific format.

In an embodiment, a mechanism for accommodating timing realization between a first component and a second component within a NoC, includes, but is not limited to, distance pipe insertion, adding buffer stages, switching buffers to higher drive or faster buffers, adjustments to wire widths, and/or indication to which wire layer(s) are being used.

It is within the scope of this invention for different mechanisms to be physically implemented to overcome timing issues within a synthesized topology, resolving timing issues prior to their occurrence by communicating constraints and/or guidance for the physical implementation. It is within the scope of this invention for physical implementation of a connection to include, but not be limited to, a physical placement of an object, a component and/or a gate around the NoC topology so that a downstream tool does not place a first connection at a great enough distance away from a second connection, so as to exceed a time restraint. It is more desirable to synthesize a network for all of the connections capable of satisfying connectivity requirements and to minimize the number of gates in the synthesized network. It is important to minimize the number of gates in the synthesized network for including, but not limited to, enabling the NoC to fit within the topology parameters; ensuring the timing requirement can be met; building more efficiently in smaller networks; and minimizing the overall power used in the interconnect between signals.

In another embodiment, components of the driving side are replaced with components having greater drive strength to increase speed. For example, when a signal is forwarded from a first switch to a second switch, the timing requirement is exceeded because the distance between the first switch and the second switch is too great, a distance pipe may be placed in between the first switch and the second switch or the drive strength may be increased to make the signal faster by using larger wires having a lower resistance to reduce the parasitic elements on the particular line.

In an embodiment, a floorplan region is a mechanism capable of including, but not limited to; constraining a component, such as a switch and/or a distance pipe stage to a physical location and/or an approximate physical location; and/or dividing a logical interconnect into a plurality of portions that are tuned to the size of the downstream tools for proper synthesis. The physical and logical configuration of the interconnects are configured together to form a logical interconnect. The floorplan regions are used to constrain a component to a particular location. The need for a floorplan region is a response to the increasing size of the network or interconnect of SoCs that are being developed. In other words, the network or interconnect of SoCs have grown larger than downstream implementation tools capacity including, but not limited to, the addition of wider interconnects and/or more components being interconnected.

In accordance with various aspects of the invention, it may be more desirable to have a switch in a particular constrained location, based on the data associated with signals being received and transmitted by the switch, because the performance of the switch may be adversely affected if the switch was moved to a location out of the constrained location.

In accordance with various aspects of the invention, an additional constraint may be utilized to place, for example, gates of a component for a switch or a pipe stage, as close together as possible within each individual component. A current problem in existing placement programs is their tendency to place components too far away from each other. It is within the scope of this invention for a switch being a single component having a plurality of gates, with each gate having a need to be placed. Although the netlist facilitates the interconnection of these components, the downstream tools physically place the components and make the routes to connect the logical connectivity specified.

In accordance with various aspects of the invention, the two separate constraints of the first aspect and the second aspect may be used simultaneously. For example, if a switch that is specified to have a particular performance has the components of that switch distributed over a larger area than specified, the switch will have a lower performance than originally specified. Thus, it would be more desirable to keep components of this switch close together, to each other. Further, based on a larger network, it is more desirable to keep components within a particular region or area of the floorplan free space so that the overall network will perform as specified or analyzed.

In an embodiment, approximations in a given semiconductor process, a maximum length of a single wire is established to ensure that the overall timing of that particular path can be met. Further, it is an important aspect to move from a first component to a second component within a given amount of time. Due to an excessive length between a first component and a second component it may not be achievable to move a signal from the first component to the second component within the given amount of time. As a result, the need for the technical solution of an insertion of distance pipe stages would solve this technical problem, as compared to current techniques.

In accordance with various aspects of the invention, receiving an area-estimation for the first component and the second component, and balancing the timing and other performance requirements in the optimization of the NoC so as to ensure the resulting NoC gates will be placeable, that is, they will fit into the free space in the floorplan allotted to the NoC.

In accordance with various aspects of the invention, further receiving a power requirement for the NoC, and balancing the timing and other performance requirements in the optimization of the NoC so as to ensure the resulting NoC will not exceed the power requirement specified in the constraint.

In accordance with various aspects of the invention, further incorporating physical routing congestion data, either as an estimation based on the NoC netlist structure, or obtained as feedback from the downstream implementation tools, and balancing the timing and other performance requirements in the optimization of the NoC so as to ensure the resulting NoC will be routable in the free space in the floorplan allotted to the NoC.

In accordance with some aspects of the invention, a method is disclosed for guiding physical generation of a NoC. The tool, which may include a machine learning model that is trained and receives feedback, receives at least one constraint parameter for the NoC, the at least one constraint parameter is selected from a group of constraint parameters including at least one physical constraint and at least one performance constraint; augmenting, using the tool, a physical floorplan for the NoC with information that guides a physical implementation of the NoC; and constraining, using the physical floorplan, the physical implementation of a connection to a location on the physical floorplan based on the at least one constraint parameter.

Certain methods according to the various aspects of the invention may be performed by instructions that are stored upon a non-transitory computer readable medium. The non-transitory computer readable medium stores code including instructions that, if executed by one or more processors, would cause a system or computer to perform steps of the method described herein. The non-transitory computer readable medium includes: a rotating magnetic disk, a rotating optical disk, a flash random access memory (RAM) chip, and other mechanically moving or solid-state storage media. Any type of computer-readable medium is appropriate for storing code comprising instructions according to various examples.

Certain examples have been described herein and it will be noted that different combinations of different components from different examples may be possible. Salient features are presented to better explain examples; however, it is clear that certain features may be added, modified and/or omitted without modifying the functional aspects of these examples as described.

Various examples are methods that use the behavior of either or a combination of machines. Method examples are complete wherever in the world most constituent steps occur. For example, and in accordance with the various aspects and embodiments of the invention, IP elements or units include: processors (e.g., CPUs or GPUs), RAM - e.g., off-chip dynamic RAM or DRAM, a network interface for wired or wireless connections such as ethernet, Wi-Fi, 3G, 4G long-term evolution (LTE), 5G, and other wireless interface standard radios. The IP may also include various I/O interface devices, as needed for different peripheral devices such as touch screen sensors, geolocation receivers, microphones, speakers, Bluetooth peripherals, and USB devices, such as keyboards and mice, among others. By executing instructions stored in RAM devices processors perform steps of methods as described herein.

Some examples are one or more non-transitory computer readable media arranged to store such instructions for methods described herein. Whatever machine holds non-transitory computer readable media comprising any of the necessary code may implement an example. Some examples may be implemented as: physical devices such as semiconductor chips; hardware description language representations of the logical or functional behavior of such devices; and one or more non-transitory computer readable media arranged to store such hardware description language representations. Descriptions herein reciting principles, aspects, and embodiments encompass both structural and functional equivalents thereof. Elements described herein as coupled have an effectual relationship realizable by a direct connection or indirectly with one or more other intervening elements.

Practitioners skilled in the art will recognize many modifications and variations. The modifications and variations include any relevant combination of the disclosed features. Descriptions herein reciting principles, aspects, and embodiments encompass both structural and functional equivalents thereof. Elements described herein as "coupled" or "communicatively coupled" have an effectual relationship realizable by a direct connection or indirect connection, which uses one or more other intervening elements. Embodiments described herein as "communicating" or "in communication with" another device, module, or elements include any form of communication or link and include an effectual relationship. For example, a communication link may be established using a wired connection, wireless protocols, near-field protocols, or RFID.

To the extent that the terms "including", "includes", "having", "has", "with", or variants thereof are used in either the detailed description and the claims, such terms are intended to be inclusive in a similar manner to the term "comprising."

The scope of the invention, therefore, is not intended to be limited to the exemplary embodiments shown and described herein. Rather, the scope and spirit of present invention is embodied by the appended claims.

## Claims

1. A method for guiding physical generation of a network-on-chip (NoC) through iterations of element placement, the method comprising:
receiving a floorplan with at least one connected zone;
receiving blockage areas in the floorplan;
locating at least one pinned element in the connected zone;
identifying a plurality of unpinned elements that are in communication with the pinned element, wherein the plurality of unpinned element are to be located within the connected zone;
pinpointing a legal placement position for each of the plurality of unpinned elements within the connected zone;
determining a first routing path for the communication path between the pinned element and the plurality of unpinned elements;
adjusting placement of one or more the unpinned element within the floorplan to improve the first routing path and balance segment lengths until an optimal routing is determined.

2. The method of claim 1, wherein the legal placement position for each unpinned element satisfies constraints and requirements for each unpinned element.

3. The method of claim 1, wherein the pinpointing includes an initial placement of any unpinned element relative to the pinned element resulting in segments between pinned elements and unpinned elements.

4. The method of claim 3, wherein at least one segment of the resulting segments is non-optimal due to placement of unpinned elements.

5. The method of claim 4 further comprising readjusting placement of the at least one unpinned element to balance the segments.

6. The method of claim 5, wherein the unpinned element is repositioned along an existing segment.

7. The method of claim 1, wherein a machine learning model identifies the legal placement position for each unpinned element using constraints for each of the unpinned elements to be placed in the floorplan.

8. The method of claim 1, wherein a machine learning model determines segments between each of the unpinned elements and the pinned element based on the placement in the floorplan of unpinned elements.

9. A design tool for editing a network-on-chip (NoC) topology onto a floorplan in a graphical view, the tool comprising a placement module that identifies global placement and local placement of elements onto the floorplan to generate a legal floorplan with optimized wire connections between elements,
wherein the tool receives the floorplan, blockage areas in the floorplan, connected zones in the floorplan, and positions of pinned elements in the floorplan such that at least one connected zone includes one or more pinned elements,
wherein the placement module places a plurality of unpinned elements that are in communication with corresponding pinned elements in the floorplan,
wherein the at least one connected zone corresponds to location of a first pinned element in communication with a set of unpinned elements selected from the plurality of unpinned elements to produce an initial placement of unpinned elements.

10. The tool of claim 9, wherein the placement module determines a first routing path for communication between the first pinned element and the set of unpinned elements.

11. The tool of claim 9, wherein the placement module adjusts placement of the set of unpinned elements within the at least one connected zone of the floorplan to improve segments of a route from the at least one pinned element to the pinned element.

12. The tool of claim 9, wherein the placement module includes a machine learning model that is trained for placement of elements within a floorplan to build a network-on-chip (NoC).
